# EUROPEAN PATENT APPLICATION

(11) **EP 4 838 162 A1**
(43) Date of publication of application: **11.11.2026**
(21) Application number: 25193618.3
(22) Date of filing: 04.08.2025
(51) Int. Cl.: F27B 3/08, F27B 3/28, F27D 3/16, F27D 3/18, F27D 19/00, F27D 21/00

(54) **SYSTEM AND METHOD FOR BOTTOM ELECTRODE COMPOUND BOTTOM BLOWING OF MULTI-MEDIA OF DC ELECTRIC ARC FURNACE**

(30) Priority: 09.05.2025 EP 25175217
(71) Applicant: CISDI Engineering Co., Ltd, Sheffield S4 7YA (GB)
(72) Inventor: YANG, NINGCHUAN, Chongqing, 400013 (CN); WU, XUETAO, Chongqing, 400013 (CN); SHI, QIUQIANG, Chongqing, 400013 (CN)
(74) Representative: Chung, Hoi Kan

(57) **Abstract**

The present invention relates to a system and method for composite bottom electrode of DC arc furnace, belonging to the technical field of steelmaking, including some of the bottom electrodes that are bottom blowing electrodes with a hollow structure. Some of the bottom blowing electrodes belong to one or multiple classes of bottom electrode, including class I, class II, and class III bottom electrode; it also includes a thermocouple, pressure sensor and laser induced breakdown spectrum system for monitoring bottom electrode temperature, spray pressure, carbon phosphorus content in the molten pool, and dynamically optimizing and automatically controlling the blowing parameters through the control unit based on the DDPG algorithm. The present invention can improve the production efficiency and reduce the consumption of raw materials.

## Description

### Technical field

The present invention belongs to the technical field of steelmaking, and relates to a system and method for the use of DC arc furnace bottom electrode.

### Background technology

DC arc furnace steelmaking as one of the main ways of electric arc furnace steelmaking, with furnace bottom as the positive of the arc current, relying on the effect of the current between electrode reinforcement pool mixing, to a certain extent, improve the dynamic conditions of the molten pool, but affected by the flat furnace type structure, melting pool mixing weak, poor dynamic conditions, the resulting long smelting cycle, phosphorus, nitrogen, oxygen control problem has been restricting the development of dc arc furnace green efficient smelting.

Mainly manifested in the following aspects: 1) the structure of raw materials for smelting is complex, the higher nitrogen content, the content of phosphorus fluctuates greatly after melting and clearing; 2) low carbon content of the molten pool, lack of carbon-oxygen reaction in the molten tank, the slow flow rate of liquid steel, poor kinetic conditions of dephosphating and denitrification; 3) in the smelting process, lime is usually added to the molten pool in the form of block, slow slag-forming rate, although the furnace wall toner spray has improved the mobility of the slag, but the toner utilization rate is low, higher consumption of raw materials, the quality of liquid steel is difficult to improve effectively; 4) modern electric arc furnace steelmaking generally adopts high power power supply to accelerate the melting of scrap steel, shorten the smelting cycle, and the high temperature arc ionization of n2 in the air makes the steel liquid easy to absorb nitrogen; 5) strengthening the oxygen supply while improving the smelting efficiency, also brings in the end-point peroxidation, low metal yield, high consumption of alloy after steel production; 6) using the bottom electrode for power supply, excessive local temperature of the furnace bottom, the power supply strength and life of the bottom electrode are limited.

Therefore, how to improve the metallurgical reaction dynamics conditions of DC arc furnace, accelerate the reaction speed of slag-steel interface, reduce the consumption of raw materials and improve the production efficiency is the technical bottleneck to be solved in the development process of DC arc furnace steelmaking to green and efficient production.

### Invention content

In view of this, the object of the present invention is to provide a system and method for the use of DC arc furnace bottom electrode to improve production efficiency.

To achieve the above purpose, the present invention provides the following technical solutions:
A system for the bottom of dc arc furnace, including multiple bottom electrodes located at the bottom of the furnace, part of the bottom electrodes are the bottom blow electrodes with a hollow structure, some bottom blowing electrodes are one or more of class I bottom electrodes, class II bottom electrodes and class III bottom electrodes; class I bottom electrode: for spraying carbon material into the molten tank, to carburize towards the molten pool, accelerate the melting of scrap steel; class II bottom electrode: for spraying slag powder into the molten tank, to form the molten slag particles in the metal liquid, increase the boundary area of gas-slag-gold three-phase reaction during dephosphination process; class III bottom electrode: for blowing gas into the molten tank, to accelerate the mass transfer in the molten tank; the class ii bottom electrode and class I bottom electrode are arranged adjacent, local cold state effect produced by neutralizing the class I bottom electrode; class III base electrode dispersion arrangement, to accelerate the bottom flow of the molten pool, strengthen the heat exchange between slag and steel;

The bottom electrode is provided with a thermocouple for monitoring the bottom electrode temperature in real time; the spray pipe connected to the bottom blow electrode is provided with a pressure sensor for monitoring the pressure of the spray pipe in real time;

Also includes laser induced breakdown spectrum system, used to stimulate the surface plasma of the melt tank through laser pulse, and through the probe-optical fiber acquisition set on the wall of the DC arc furnace transmitted to the laser induced breakdown spectrometer, online analysis of carbon phosphorus content in the DC arc furnace;

It also includes the control unit connected to the bottom blowing electrode to realize the dynamic optimization and automatic control of the spray parameters based on the power supply strength of the bottom blowing electrode, the temperature of the bottom electrode and the carbon and phosphorus content of the molten pool, based on the depth certainty strategy gradient algorithm DDPG.

Optionally, the control unit performs dynamic optimization and automatic control of the injection parameters based on the depth certainty strategy gradient algorithm DDPG, wherein DDPG realizes continuous control of the injection parameters through the Actor-Critic architecture;

The state space of the DDPG includes bottom electrode temperature Telectrode, spray pressure Pblow, calibrated real-time carbon content Ct, compensated real-time phosphorus content Pt, bottom electrodeIelectrode,current intensity Ielectrode, carbon 3-second sliding window differenceΔC_(t-3:t)and phosphorus 3-second sliding window differenceΔP_(t-3:t), state vector Stis expressed as: $St = \left[Telectrode, Pblow, Ct, Pt, Ielectrode, ΔC_\left(t-3:t\right), ΔP_\left(t-3:t\right)\right]$

The action space of the DDPG includes the jet flow of the bottom electrodes of Class I, Class II and Class III, and the action vector at is expressed as: $at = \left[QI,QII,QIII, MI,MII,MIII\right]$

QI, QII and QIII respectively represent the injection flow of Class I, Class II and Class III bottom electrodes, MI, MII and MIII respectively represent the corresponding spray materials of class I, class II and class III bottom electrodes after single heat coding treatment;

The reward function of DDPG simultaneously considers the control accuracy of carbon and phosphorus content, flow consumption, pressure fluctuation, and the rationality of material selection, and is constructed as: $\begin{matrix}R_t = 10 {e}^{∧} \left(-5\left|C_t-C_target\right|\right) + 8 {e}^{∧} \left(-10\left|P_t-P_target\right|\right) - 0.1 \sum \left〚Q_i-0.05σ{_P}^{∧}2\right. + \sum \left〚λ_m M_i\right〛 \\ ]\end{matrix}$

C_targetrepresents the target carbon content, P_targetthe target phosphorus content, Q_i the spray flow rate, σ_P^2 the variance of the pressure fluctuation, λ_m the material cost coefficient, and $\left〚M\right〛 _ i$ the material type selection;

Actor network input state space, output action space, namely the jet flow and spray material type of class I, II, and III bottom electrodes respectively; because the material type is a discrete variable, it is encoded as single heat code, and then the result is combined with continuous spray flow rate to map to the discrete material selection

Critic The network input state space and action space, predicting the long-term return after taking a specific action in a given state, that is, the output Q value.

Alternatively, the medium of the carrier gas 1 of the class I bottom electrode is air, nitrogen, or CO2; the carbon material is toner, coking coal, or other toner.

Optionally, the medium of the carrier gas 2 of the class II bottom electrode is O2, O2-N2 mixture or O2-CO2 mixture; the slag powder is lime powder or limestone powder.

Optionally, the pure gas base blowing medium of the class III base electrode is a mixture of one or more of N2, Ar, CO2, O2.

Optionally, the inner diameter sizes of the class I bottom electrodes and class II bottom electrodes are 4 to 25 mm and the class III bottom electrode are 0.1 to 10 mm.

Optionally, the bottom blow interface of the bottom blow electrode is insulated from the external medium input interface.

Optionally, the bottom blowing electrode is mounted at the bottom of the electric arc furnace and packed through the bottom of the furnace.

A method for DC arc furnace bottom electrode composite bottom blowing, providing the above for the multiple medium system of DC arc furnace bottom electrode composite bottom blowing, dynamically controlling the power supply strength of the bottom blowing electrode to realize the cooperative operation of the bottom blowing electrode and the bottom electrode.

The beneficial effect of the present invention lies in that:
(1) The multi-media system of the bottom electrode of the DC arc furnace provided in this application adopts the hollow design of the bottom electrode. In the smelting process, the solid part of the bottom blowing electrode supplies power to the melting pool, and the hollow part dynamically inputs a variety of media into the melting pool, realizing the efficient cooperative operation of the bottom electrode and the bottom electrode;
(2) The new smelting method of DC arc furnace provided in this application can spray carbon materials and slag powder into the melting pool through the bottom blowing electrode, which can realize the efficient carbonization of the melting pool, accelerate the melting of scrap steel and the efficient removal of impurities. While reducing the consumption of raw materials, the smelting end point phosphorus 0.005% and N 50ppm;
(3) The multi-media system of the electrode composite bottom blowing of the DC arc furnace provided in this application can effectively improve the uniformity of steel liquid composition and temperature, reduce the energy loss in the smelting process, accelerate the smelting rhythm, shorten the smelting cycle by 3min, and reduce the power consumption per ton of steel by more than 10kWh;
(4) Through the invention, spraying carbon material and slag making powder into the melting tank in the steelmaking process of electric arc furnace, the peroxide problem can be controlled and the metal yield is increased by 1~3% effectively, and the alloy yield of steel alloying process is increased by 4~5% compared with that of the electric furnace with bottomless blowing function.
(5) The depth-based strategy gradient algorithm provided by the invention has the following beneficial effects:
   1) The spraying process is often faced with dynamic interference such as fluctuation of raw material composition, working condition change and equipment aging. DDPG advantage can update the policy network (Actor) and value network (Critic) in real time to dynamically adjust the injection parameters (including flow and material type) according to environmental feedback. Deep neural network is used to extract the features of high-dimensional states (such as temperature, pressure, and component data) to capture the nonlinear relationships and adapt to complex working conditions.
   2) The injection parameters (such as oxygen flow, pulverized coal rate, and injection Angle) need to be jointly controlled together. PID or rule control is difficult for traditional PID to deal with multivariate coupling. DDPG directly outputs the continuous action value (such as the opening percentage of the injection valve) to avoid the accuracy loss caused by discretization. By maximizing long-term cumulative rewards (e. g., lowest energy consumption, highest output, and stable quality), balancing short-term fluctuations with long-term goals, and avoiding local optima.
   3) The injection effect (such as the end point of steelmaking) often lags behind the control action, and it is difficult to associate the action with the delay result. Critic The network evaluates the long-term value of the current-state-action pair to solve the delayed reward problem.
   4) The mechanism of the spraying process is complex, and it is difficult to establish an accurate physical model. With DDPG, a precise mathematical model directly learns the optimal strategy by interacting with the environment. Combine prior knowledge (such as historical operation data) to initialize the policy network to accelerate convergence.

Other advantages, objectives and features of the invention will be elaborated in the subsequent specification and, to the extent, will be obvious to the person skilled in the field, or may be taught from the practice of the invention. The objectives and other advantages of the present invention can be realized and obtained by the instructions below.

### Description of the Drawings

In order to clarify the objectives, technical schemes and advantages of the invention, a detailed description of the invention is preferred in combination with the drawings, wherein:
FIG. 1 is a schematic diagram of the DC arc furnace in the present invention;
FIG. 2 is a schematic cross section of the distribution of multiple medium bottom blow electrodes in Embodiment 1 of the present invention;
FIG. 3 is a process pattern of class I bottom electrode in Embodiment 1 of the present invention;
FIG. 4 is a process pattern of class II bottom electrode in embodiment 1 of the present invention;
FIG. 5 is a process pattern diagram of a class III bottom electrode as shown in Embodiment 1 of the present invention;
FIG. 6 is a schematic cross section of electrode distribution in Embodiment 2 of the present invention.

Figure label description: class III bottom electrode bottom blow control system 1, class I bottom electrode bottom blow control system 2, class II bottom electrode bottom blow control system 3, class III bottom electrode system distributor 4, class I bottom electrode system distributor 5, class II bottom electrode system distributor 6, insulation joint 7, bottom blow electrode 8, bottom blow electrode air cooled inlet 9, bottom electrode conductive copper strip 10.

### Embodiments

With the embodiment of the invention described below through specific examples, those skilled in the art can easily understand the other advantages and benefits of the invention by the contents disclosed in the specification. The invention may be implemented or applied through different specific embodiments, and the details in the specification can be modified or changed based on different views and applications without departing from the spirit of the invention. It should be noted that the illustration provided in the following embodiments only schematically the basic idea of the invention, and the features in the following embodiments can be combined.

Among them, the drawings are only used for example illustration, which is only a schematic diagram, not a physical diagram, and cannot be understood as a limitation on the invention of the invention; to better illustrate the embodiment of the invention, some parts of the drawings may be omitted, enlarged or reduced and do not represent the size of the actual product; and some structures in the art may be omitted.

The same or similar labels in the drawings of the embodiment of the invention correspond to the same or similar components; In the description of the present invention, It needs to be understood that, If the orientation or position relationship indicated by the terms "up", "down", "left", "right", "front", "back" is based on the orientation or position relationship shown in the accompanying drawings, Only to facilitate the description of the present invention and to simplify the description, Rather than indicating or implying that the device or element must have a specific orientation, be constructed and operate in a specific orientation, So the language in the accompanying diagram is only for exemplary illustration, Could not be understood as a limitation on the present invention, For ordinary technicians in the field, The specific meaning of the above terms can be understood according to the specific circumstances.

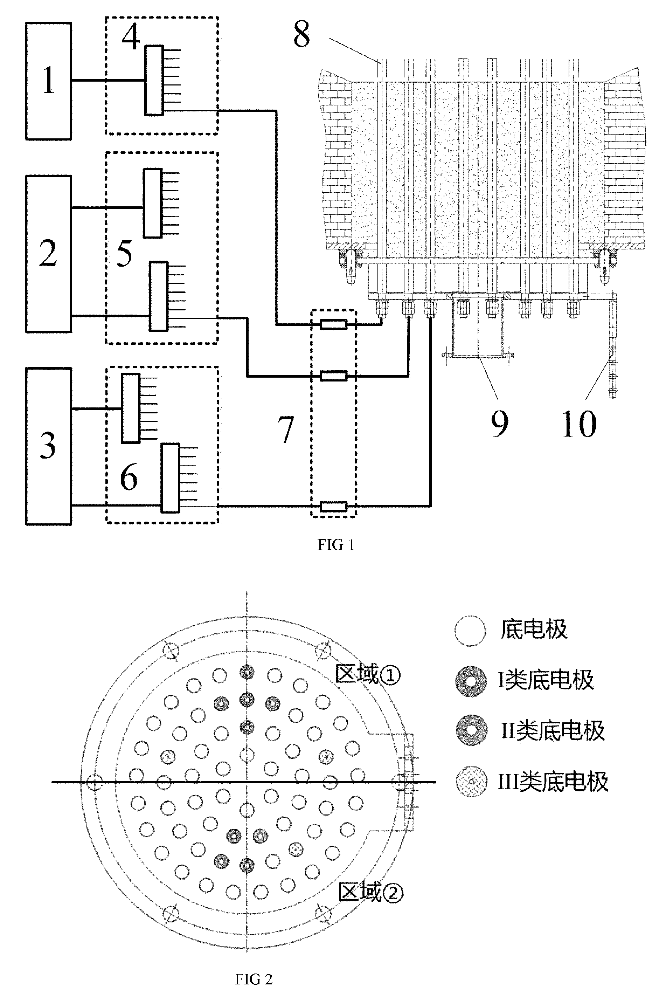

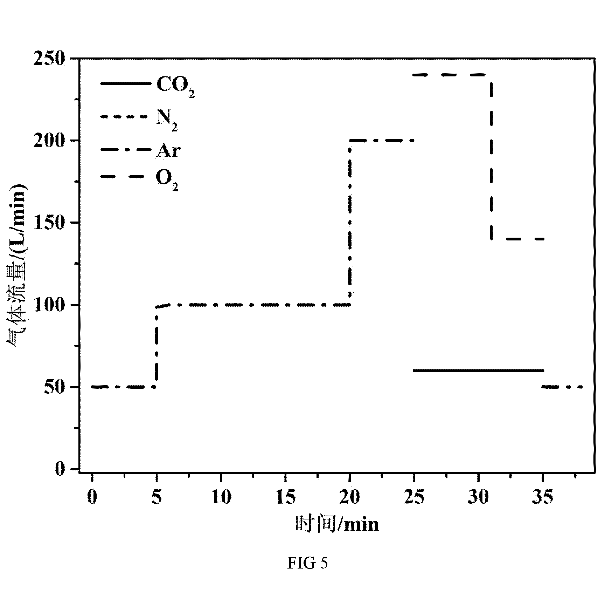

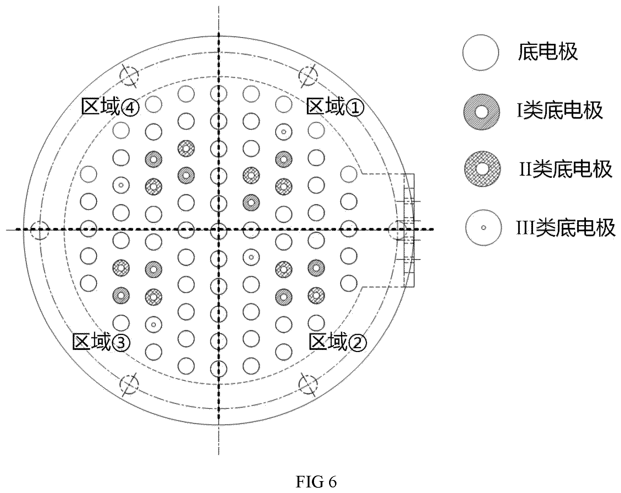

See also, Figure 1 to Figure 6, A system for the bottom of DC arc furnace, Including multiple bottom electrodes located at the bottom of the furnace, Part of the bottom electrode is the bottom blow electrode 8 with a hollow structure, The bottom blow electrode 8 is needle-like, Into the furnace melting tank; Some bottom blow electrodes 8 are one or more of Class I bottom electrodes, Class II bottom electrodes and Class III bottom electrodes; Class I bottom electrode: for spraying carbon material into the molten tank, To carburize towards the molten pool, Accelerate the melting of scrap steel; Class II bottom electrode: for spraying slag powder into the molten tank, To form the molten slag particles in the metal liquid, Increase the boundary area of gas-slag-gold three-phase reaction during dephosphination process; Class III bottom electrode: for blowing gas into the molten tank, To accelerate the mass transfer in the molten tank; Also includes the laser-induced breakdown spectroscopy system, For stimulating the molten pool surface plasma through a laser pulse, And through the probe-fiber acquisition transmission to the laser-induced breakdown spectrometer, Online analysis of carbon and phosphorus content in the DC arc furnace; Also includes a control unit connected to the bottom blow electrode 8, In order to realize the power supply strength of the bottom blowing electrode 8, the bottom blowing electrode temperature and the carbon and phosphorus content in the smelting process, The jet parameters are dynamically optimized and automatically controlled based on the deep deterministic strategy gradient algorithm DDPG.

In order to prevent the center of class I bottom electrode from being blocked by the melting tank and the cooling rate of liquid steel is too fast, Class II bottom electrode accelerates the burning of the furnace bottom due to the oxidation of the local liquid steel temperature, The present invention divides the bottom electrode into several regions, The bottom electrode, class I bottom electrode, the bottom electrode of class II and class III bottom electrodes in each region cooperate with each other, The bottom electrode is energy to the molten cell, among, Class III base electrode dispersion arrangement, To accelerate the heat transfer and mass transfer between the steel fluid, Strengthen the heat transfer between slag steel, And the thermal effect of balancing the class I bottom electrode and the class II bottom electrode region; Temporary arrangement of Class II and Class I bottom electrodes, To reduce the cooling effect of liquid steel brought by the reaction area of class I bottom electrode, Make the furnace bottom steel liquid temperature rapid neutralization and uniform, To achieve the purpose of synchronous burning of each bottom blowing electrode 8. According to the requirements of smelting process, the quantity proportion of each type of bottom blowing electrode 8 in each region can be adjusted, and the distribution proportion ranges from 0 to 100%.

The invention realizes the efficient carburization, rapid slag formation, impurity removal and strong mixing, which improves the production efficiency and reduces the consumption of raw materials.

Optionally, the medium of carrier gas 1 of class I bottom electrode is air, nitrogen or CO2, and the flow rate is 0 ~ 1000 N m3/h; the carbonaceous material is toner, coking coal, graphite powder or other carbonized powder; the powder flow rate of single class I bottom electrode is 0 ~ 50 kg/min, and the particle size of powder is 1 mm.

Optionally, the medium of carrier gas 2 of class II bottom electrode is O2, O2-N2 mixture or O2-CO2 mixture, the carrier gas flow is 0 ~ 1000 N m3/h, the volume flow ratio of oxygen is 0~100%; the slag powder is lime powder or limestone powder, the flow of single Class II bottom electrode is 0 ~ 50 kg/min, and the particle size of powder is 1 mm.

Optionally, the pure gas bottom blowing medium of the class III bottom electrode is a mixed gas of one or more of N2, Ar, CO2, O2, with a strength of 0 ~ 0.05 Nm3 / (int).

Optionally, the inner diameter size of class I bottom electrode and Class II bottom electrode is 4~25mm, and that of Class III bottom electrode is 0.1~10mm.

Optionally, the Class I and Class II bottom electrodes are 12mm or 14mm and 4mm or 5mm.

Optionally, the bottom blow interface of the bottom blow electrode 8 is insulated from the external medium input interface, so as to prevent the medium input process and the bottom electrode from conducting the system failure or even safety accidents.

Optionally, the bottom blow electrode 8 is installed at the bottom of the arc furnace and packed through the bottom of the furnace.

Optionally, the control unit includes a system distributor connected to the bottom blow electrode 8 and a control system connected to the system distributor comprising a class I bottom electrode system dispenser 5 and class II bottom electrode system distributor 6 connected to the class I bottom electrode and class II bottom electrode, respectively, and a class I bottom electrode blow control system 2 and class II bottom electrode blow control system 3 connected to the class I bottom electrode system dispenser 5 and class II bottom electrode system distributor 6, respectively.

Although the control unit can adjust the injection parameters according to the power supply strength, how to monitor the actual reaction in the molten tank in real time, such as carbon content, the formation of slag, gas distribution, etc., may lack a feedback mechanism, resulting in the adjustment is not accurate. Therefore, how to accurately adjust the flow rate, pressure and composition ratio of the injection medium according to different smelting stages and furnace conditions, so as to achieve the best smelting effect is also a technical problem to be solved in the invention. The invention introduces the real-time monitoring of molten pool components (e. g., laser induced breakdown spectrum technology), and dynamically adjusts the injection parameters in combination with the AI algorithm.

Specifically, the invention inserts K-type thermocouple in each bottom electrode needle (range 0-1600°C, response time <0.5s), piezoelectric pressure sensor (range 0-10MPa, precision ± 0.1%FS); and LIBS probe on the furnace wall (sampling frequency 10Hz, detection range C:0.01-1.5%,P:0.001-0.1%). Then based on the depth certainty strategy gradient algorithm DDPG is used to realize the bottom electrode dynamic injection optimization, the above collected data is used as the state input of DDPG, and the output injection flow and injection material selection.

The DDPG algorithm is a deep reinforcement learning algorithm based on the Actor-Critic framework that is suitable for control tasks in continuous action space. Its core principles include:
Actor network: Outputs the actions to be taken in a given state, and updates the parameters by maximizing the long-term reward expectation.

Critic Network: Estimates the Q value of the state-action pair, and updates the parameters by minimizing the gap between the Q value estimate and the true value.

Experience playback buffer: store the historical interaction data, break the sample correlation, and realize the unbiased experience replay.

Target network: The Actor and Critic networks are equipped with target networks and regularly replicate parameters from the main network to calculate stable target Q values.

Exploration strategy: Add random perturbations to the action output of the actor network to encourage exploration.

The state space of the DDPG contains the following variables:
Base electrode temperature Telectrode: reflects the working state of the electrode and the thermal field distribution in the furnace, affecting the setting of injection parameters. Temperature data can be obtained in real time through thermocouples, for as in degrees Celsius (°C), with the value range determined according to the actual furnace condition.

Pbloom: it affects the delivery efficiency of spray gas and powder and its distribution in the melt tank. It can be monitored in real time by a pressure sensor installed in the spray pipe in a mpa (MPa).

Ct and phosphorus content of molten steel and Pt: key component index, directly related to the quality of molten steel and subsequent process, are obtained through LIBS probe in% respectively.

The current strength of the bottom electrode Ielectrode: it reflects the power supply state of the electric arc furnace and the electrical characteristics of the melting pool, and affects the optimization of the injection parameters. Through the electrical control system of the electric arc furnace, in ampere (A), the range is determined according to the design parameters of the electric arc furnace.

The state space also considers historical data, such as time series information, to capture dynamic changes, so the 3-second sliding window ΔC_(t-3:t) ΔP_(t-3:t)difference for carbon content and the 3-second sliding window difference for phosphorus content are added.

Then the state vector St is expressed as: $St = \left[Telectrode, Pblow, Ct, Pt, Ielectrode,,\right] ΔC _ \left(t-3:t\right) ΔP _ \left(t-3:t\right)$

The action space of DDPG requires the injection flow of Class I, Class II and Class III bottom electrodes and the corresponding spray material, Since the material species belong to the discrete variables, While DDPG is processing the continuous action space, So how to deal with the discrete variables is a challenge, Thus encoding the material species as continuous values, Such as using a different range of numerical values representing different materials, Or by using multiple output nodes, The probability that each node corresponds to one material, concrete, Of the material type as part of a continuous action, for instance, Assign a material selection parameter to each base electrode in the action space, Convert to specific material by threshold judgment. For example, the material parameters are between 0 and 1, if material A is less than 0.5, otherwise material B is selected. But this may introduce a discontinuity and affect the gradient updating. Alternatively, the discrete choices were approximated as continuous using the Gumbel-Softmax technique.

In summary, the action vector at of DDPG is expressed as: $at = \left[QI,QII,QIII, MI,MII,MIII\right]$

QI, QII and QIII represent the jet flow of Class I, Class II and Class III bottom electrodes respectively, and MI, MII and MIII represent the corresponding spray materials of Class I, Class II and Class III bottom electrodes after single heat coding treatment.

In terms of the reward function of DDPG, it is necessary to consider the control accuracy of carbon and phosphorus content, flow consumption, pressure fluctuation, and the rationality of material selection. For example, the use of specific materials may have different costs or effects that need to be reflected in the reward. For example, imposing penalties for selecting high-cost materials, or adjusting rewards to how well the material matches the current process. The present invention quantifies the influence of material selection into the reward, such as the influence of different materials on decarbonization and dephosphorization efficiency, thus adding material-related items to the reward function, which is constructed as: $\begin{matrix}R_t = 10 {e}^{∧} \left(-5\left|C_t-C_target\right|\right) + 8 {e}^{∧} \left(-10\left|P_t-P_target\right|\right) - 0.1 \sum \left〚Q_i-0.05σ{_P}^{∧}2\right. + \sum \left〚λ_m M_i\right〛 \\ ]\end{matrix}$

It is the target carbon content, the target phosphorus content, the spray C_target P_target Q_i σ_P^2 λ_m M_iflow rate, the variance of pressure fluctuation, the material cost coefficient, and the material type selection.

Both Actor and Critic networks adopt multi-layer neural network structure. Actor network inputs state space and output action space, that is, the jet flow of class I, Class III and Class III bottom electrodes. Critic Network input state space and action space, output Q value, used to evaluate the quality of the action.

For the Actor network, it needs to output an action vector containing continuous values (jet flow) and discrete values (type of spray material). Since DDPG is usually used to process a continuous action space, directly output discrete variables is not part of its original design, this embodiment also provides a way to be encoded as monothermal coding or other forms of representation, and then combine the result with a continuous jet flow. For example, if N materials are present, an additional N neurons can be added to the output layer of the Actor network to represent the selection of these N materials. A material can then be selected by applying the softmax function to convert to a probability distribution.

The task of the Critic network is to estimate the value of taking a specific action in a given state, namely the Q value. Critic The network receives state St and action At as inputs and predicts the long-term return after performing the action in that state. Critic The network design is provided as follows:
The input layer shall accept state St and action At (including spray flow and spray material type coded in some way).

The network structure can be tuned to suit specific circumstances, but usually contains several hidden layers, eventually outputting a scalar representing the value estimate of that state-action pair.

Training process: First, the Actor and Critic network and its target network are initialized, and then the data is collected through the interaction with the environment and stored in the experience playback buffer. A batch of data randomly sampled from the buffer was used to train the Actor and Critic networks. The Actor network is updated with a policy gradient approach and the Critic network by minimizing the mean squared error loss function of Q values. The parameters of the target network are synchronized with the main network parameters through a soft update manner.

Action selection: During the training process, the actions generated by the Actor network will add some exploration noise to encourage the algorithm to explore more state-action space. As the training proceeds, the amplitude of the algorithm gradually converges to the optimal strategy.

State transfer: according to the current state and action, predict the next state and the reward through the physical model and the chemical reaction model of the electric arc furnace. For example, the change of the bottom electrode temperature, spray pressure, carbon and phosphorus content and current intensity of the bottom electrode are predicted based on the change of spray flow.

The present invention also provides a method for composite bottom blowing of DC arc furnace bottom electrode, designing the bottom electrode at the bottom of the furnace to the bottom blowing electrode to accelerate the gas, carbon material, slag powder, and dynamically controlling the bottom blowing parameters of the bottom blowing electrode to realize the cooperative operation of the bottom blow and the bottom electrode.

By designing part of the bottom electrode as a bottom blowing electrode 8 with a hollow structure, the present invention realizes the composite metallurgical function of energizing and bottom blowing multiple. The solid portion of the bottom blow electrode 8 supplies power to the molten cell, The hollow part can dynamically spray gas, carrier gas-carbon material and carrier gas-slag powder into the molten tank, Combined with the bottom electrode during the smelting process, Each bottom blowing electrode 8 multiple media bottom blowing cooperate with each other, While cooling the bottom electrode, Complete the efficient carburization, rapid slag formation, impurity removal and strong mixing in the melting tank, While rapid and uniform melting pool composition and temperature, The smelting cycle is shortened by 3min; Metal yield increased by 1~3%; 0.005%, End-point: N 50ppm; The yield of the alloying process of the steel is 4~5% higher than that of the electric furnace with bottomless blowing function.

### Embodiment 1

The present invention is applied to a 100t DC arc furnace, The schematic diagram of the multiple dielectric electrode system is shown in Figure 1, Class III bottom electrode bottom blow control system 1 is connected to Class III bottom electrode system distributor 4, Class III bottom electrode system distributor 4 to deliver the bottom blow gas uniformly to the bottom blow electrode 8 of the hollow structure, Complete the transmission task of the bottom blowing gas in the smelting process; Class I bottom electrode bottom blow control system 2 and Class II bottom electrode bottom blow control system 3 are connected with Class I bottom electrode system distributor 5 and Class II bottom electrode system distributor 6, respectively, Each group of dispensers is connected to the corresponding bottom blow electrode 8, The powder is uniformly delivered to each bottom blowing electrode 8 through the distributor, Complete the task of carbonization and dephosphating in the smelting process. In this embodiment, class I bottom electrode blowing control system 2, class II bottom electrode blow control system 3 and class III bottom electrode blow control system 1 are equipped with spray parameter automatic control model based on depth certainty strategy gradient algorithm DDPG, adjust and set the spray flow and blowing material of class I, II and III bottom electrodes, and send the set parameter information to each set of distributors. The insulation joint 7 is provided on the conveying pipe between the distributor and the bottom blow electrode 8 to ensure the safety of the injection system. All bottom electrodes are connected to the bottom electrode conductive copper row 10, and the electrode bottom plate is provided with the bottom blowing electrode air cooled inlet 9.

The furnace bottom electrode adopts air-cooled needle type bottom blowing electrode 8, The bottom electrode is arranged in a ring way on the electrode bottom plate, Base electrode diameter of 50mm, Made of stainless steel material, As shown in Figure Figure 22, The bottom electrode region was divided into two reaction regions according to the solid lines shown in Fig, Area ① uses three Class I bottom electrodes, two Class II bottom electrodes and two Class III bottom electrodes, Area ② uses 2 Class I bottom electrodes, 2 Class II bottom electrodes and 2 Class III bottom electrodes, Using the arrangement of class II bottom electrode and class I bottom electrode, Local cold-state effect produced by neutralizing class I bottom electrodes, At the same time, ensure that the bottom electrode synchronous erosion; Class III bottom electrodes are arranged separately, Accelerates the bottom flow of the molten pool, Strengthen the heat transfer between slag and steel. The inner diameter of class III bottom electrode hole is 4mm, and that of class I and class II bottom electrode hole is 12mm.

Carbon material and slag powder are toner and lime powder respectively. The powder particle size is 200 µm, and the powder spraying rate of single bottom blowing electrode 8 is 0 ~ 20 kg/min. The carrier gas 1 of class I bottom electrode is air, the carrier gas 2 of class II bottom electrode is O2, and the gas flow of single bottom blowing electrode 8 is 50 ~ 500 N m3/h. The bottom blowing stirring gas is Ar, and the gas flow of a single class III bottom electrode is 50 ~ 400 NL/min.

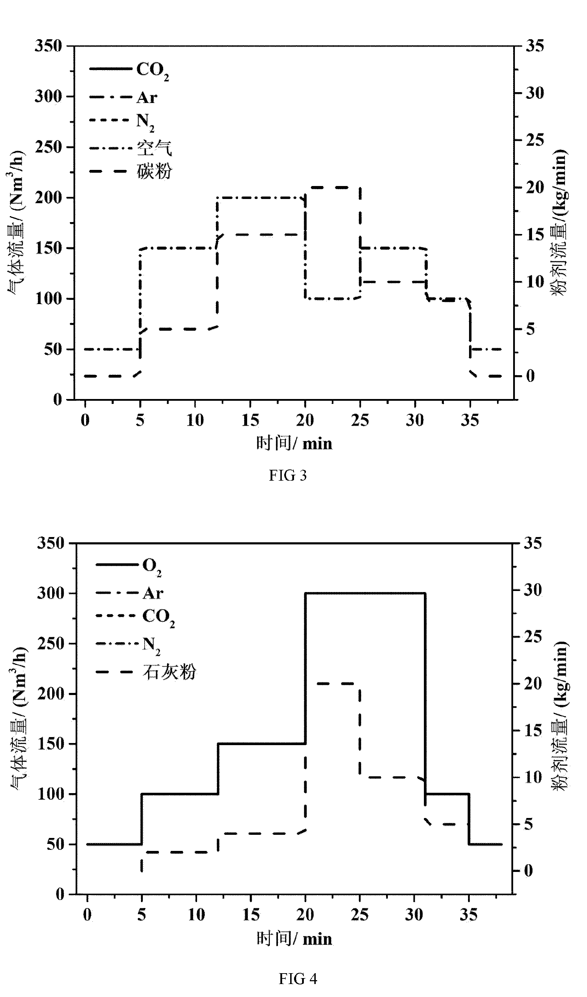

The process drawings of single class I bottom, class II and class III bottom electrodes are shown in Figure 3, Figure 4 and Figure 5 respectively. The specific steps are as follows:
(1) 0~5min, Thermocouples monitor the bottom electrode temperature in real time, The pressure sensor monitors the pressure of the injection pipe in real time, Real-time analysis of carbon phosphorus content in DC arc furnace by laser induced breakdown spectrometer, Send the acquisition results to Class I Base Control System 2, Class II Base Control System 3 and Class III Base Control System 1, Based on the DDPG algorithm, the following results are output and sent to each set of distributors: Class I bottom electrode and class II bottom electrode respectively spray air and O2 into the molten tank, Flow rate of 50 N m3/h, Class III bottom electrode is sprayed into the melt tank with Ar, Flow rate of 50 N L/min, Prevent the bottom blow electrode 8 from clogging.
(2)6~12min, In the stage of molten pool carbonization, Thermocouples monitor the bottom electrode temperature in real time, The pressure sensor monitors the pressure of the injection pipe in real time, Real-time analysis of carbon phosphorus content in DC arc furnace by laser induced breakdown spectrometer, Send the acquisition results to Class I Base Control System 2, Class II Base Control System 3 and Class III Base Control System 1, The following results are output based on the DDPG algorithm and sent to each set of distributors: Class I bottom electrode spraying air-toner into the melting tank, The spraying rate was 5 kg/min, Air flow rate of 150 N m3/h; Class II bottom electrode to spray oxygen into the molten tank-lime powder, Powder injection rate of 2 kg/min, Oxygen flow rate of 100 N m3/h, Class III bottom electrode to spray Ar into the molten cell, Flow rate of 100 NL/min.
(3)13~20min, With the melting of the scrap steel, The height of the molten pool rises, To accelerate the melting of scrap steel, Thermocouples monitor the bottom electrode temperature in real time, The pressure sensor monitors the pressure of the injection pipe in real time, Real-time analysis of carbon phosphorus content in DC arc furnace by laser induced breakdown spectrometer, Send the acquisition results to Class I Base Control System 2, Class II Base Control System 3 and Class III Base Control System 1, The following results are output based on the DDPG algorithm and sent to each set of distributors: Class I bottom electrode spraying air-toner into the melting tank, The spraying rate was 15 kg/min, Air flow rate of 200 N m3/h, Increase the carburization rate of the molten tank; At the same time, the class II bottom electrode sprayed oxygen-lime powder into the molten tank, Powder injection rate of 4 kg/min, Oxygen flow rate of 150 N m3/h, Conduct liquid steel dephosphorization; Class III bottom electrode to spray Ar into the molten cell, Flow rate of 100 N L/min, Accelerate pool flow.
(4)21~25min, The electric arc furnace is in the melting stage, Thermocouples monitor the bottom electrode temperature in real time, The pressure sensor monitors the pressure of the injection pipe in real time, Real-time analysis of carbon phosphorus content in DC arc furnace by laser induced breakdown spectrometer, Send the acquisition results to Class I Base Control System 2, Class II Base Control System 3 and Class III Base Control System 1, Based on the DDPG algorithm, the following results are output and sent to each set of distributors: Class II bottom electrode is sprayed into the melt tank with oxygen-lime powder, Powder injection rate of 20 kg/min, Oxygen flow rate of 300 N m3/h, Non-liquid steel for rapid deep dephosphorization; Class I bottom electrode to spray air into the molten tank, The powder spraying rate was 4 kg/min, Air flow rate of 100 N m3/h, Use the carbon and oxygen reaction to accelerate the mass transfer in the molten tank; Class III bottom electrode is sprayed into the melt tank with Ar, Flow rate of 200 N L/min.
(5)26~31min, The electric arc furnace melting tank is in the heating stage, Thermocouples monitor the bottom electrode temperature in real time, The pressure sensor monitors the pressure of the injection pipe in real time, Real-time analysis of carbon phosphorus content in DC arc furnace by laser induced breakdown spectrometer, Send the acquisition results to Class I Base Control System 2, Class II Base Control System 3 and Class III Base Control System 1, The following results are output based on the DDPG algorithm and sent to each set of distributors: Class I bottom electrode spraying air-toner into the melting tank, The spraying rate was 10 kg/min, Air flow rate of 150 N m3/h; Class II bottom electrode to spray oxygen into the molten tank-lime powder, Powder izing rate 10 kg/min, Oxygen flow rate of 300 N m3/h, Spray O2-CO2 mixed gas into the molten cell, CO2 Volume ratio of 20%, Flow rate of 300 NL/min, Strengthen the reaction in the molten pool.
(6)32~35min, Thermocouples monitor the bottom electrode temperature in real time, The pressure sensor monitors the pressure of the injection pipe in real time, Real-time analysis of carbon phosphorus content in DC arc furnace by laser induced breakdown spectrometer, Send the acquisition results to Class I Base Control System 2, Class II Base Control System 3 and Class III Base Control System 1, The following results are output based on the DDPG algorithm and sent to each set of distributors: Class I bottom electrode spraying air-toner into the melting tank, The spraying rate was 8 kg/min, Air flow rate of 100 N m3/h; Class II bottom electrode to spray oxygen into the molten tank-lime powder, Powder injection rate of 5 kg/min, 100 N m3/h, Class III bottom electrode spray O2-CO2 into the molten cell, Flow rate of 200 NL/min, CO2 Volume ratio of 30%.
(7)36~38min, Electric arc furnace, Thermocouples monitor the bottom electrode temperature in real time, The pressure sensor monitors the pressure of the injection pipe in real time, Real-time analysis of carbon phosphorus content in DC arc furnace by laser induced breakdown spectrometer, Send the acquisition results to Class I Base Control System 2, Class II Base Control System 3 and Class III Base Control System 1, Based on the DDPG algorithm, the following results are output and sent to each set of distributors: Class I bottom electrode and class II bottom electrode respectively spray air and O2 into the molten tank, Flow rate of 50 N m3/h, Class III bottom electrode is sprayed into the melt tank with Ar, Flow rate of 50 NL/min, Prevent the bottom blow electrode 8 from clogging.

After adopting the method of this invention, the smelting cycle of electric arc furnace is shortened by 5min, the power consumption of a ton of steel is reduced by 10kWh, the phosphorus content in liquid steel is less than 0.005%, the nitrogen content is controlled below 50ppm, the metal yield is increased by 2%, the alloyed yield is increased by 3% on average, the cleanliness of liquid steel is significantly improved, and the smelting rhythm is significantly improved. Through the deep certainty strategy gradient algorithm DDPG, the control accuracy of the carbon content is ± 0.015%, the fluctuation range of phosphorus content is <0.005%, the material switching response time is <1.2s, the electrode life is increased: 23%, the incidence of pressure overshoot <0.5%, and the incidence of composition overshoot <1.3%.

### Embodiment2:

The present invention is applied to a 150t continuous fed DC arc furnace, The furnace bottom electrode adopts air-cooled needle type bottom blowing electrode 8, The bottom electrode is arranged in a strip shape on the electrode bottom plate, Base electrode diameter of 50mm, Made of stainless steel material, As shown in Figure Figure 66, The bottom electrode region was divided into four reaction regions according to the dashed lines shown in the figure, Two Class I bottom electrodes, two Class II bottom electrodes and one Class III bottom electrodes were used in each region, The rest are solid heart electrodes; Using the arrangement of class II bottom electrode and class I bottom electrode, Local cold-state effect produced by neutralizing class I bottom electrodes, At the same time, ensure that the bottom electrode synchronous erosion; Class III bottom electrodes are arranged separately, Accelerates the bottom flow of the molten pool, Strengthen the heat transfer between slag and steel. The inner diameter of class III bottom electrode is 5mm, and that of class I and II is 14mm.

Graphite powder and lime powder are used for carbon material and slag powder respectively. The powder particle size is 100 µ m, and the powder spraying rate of single bottom blowing electrode 8 is 0 ~ 20 kg/min.carrier gas 1 is air, carrier gas 2 is O2, and the gas flow of single bottom blowing electrode 8 is 50 ~ 500 N m3/h. The bottom blow stirring gas is Ar, and the gas flow rate of a single class III bottom electrode is 50 to 400 N L/min. The operation steps of each stage are as follows:
(1) 0~8min electric arc furnace charging stage, Thermocouples monitor the bottom electrode temperature in real time, The pressure sensor monitors the pressure of the injection pipe in real time, Real-time analysis of carbon phosphorus content in DC arc furnace by laser induced breakdown spectrometer, Send the acquisition results to Class I Base Control System 2, Class II Base Control System 3 and Class III Base Control System 1, Based on the DDPG algorithm output and sent to each set of distributors: Class I bottom electrode spraying air-graphite powder into the molten tank, The spraying rate was 10 kg/min, Air flow rate of 150 N m3/h, Carburization to the molten tank; Class II bottom electrode to spray oxygen into the molten tank-lime powder, Powder injection rate of 2 kg/min, Oxygen flow rate of 100 N m3/h, Class III bottom electrode is sprayed into the melt tank with Ar, Flow rate of 100 N L/min, Prevent the bottom blow electrode 8 from clogging.
(2)9~22min, With the melting of the scrap steel, The height of the molten pool rises, To accelerate the melting of scrap steel, Thermocouples monitor the bottom electrode temperature in real time, The pressure sensor monitors the pressure of the injection pipe in real time, Real-time analysis of carbon phosphorus content in DC arc furnace by laser induced breakdown spectrometer, Send the acquisition results to Class I Base Control System 2, Class II Base Control System 3 and Class III Base Control System 1, Based on the DDPG algorithm, the following results are output and sent to each set of distributors: Class I bottom electrode spraying air-graphite powder into the molten tank, The spraying rate was 20 kg/min, Air flow rate of 200 N m3/h, Increase the carburization rate of the molten tank; At the same time, the class II bottom electrode sprayed oxygen-lime powder into the molten tank, Powder injection rate of 6 kg/min, Oxygen flow rate of 150 N m3/h, Conduct liquid steel dephosphorization; Class III bottom electrode to spray Ar into the molten cell, Flow rate of 150 N L/min, Accelerate pool flow.
(3)23~26min, The electric arc furnace is in the melting stage, Thermocouples monitor the bottom electrode temperature in real time, The pressure sensor monitors the pressure of the injection pipe in real time, Real-time analysis of carbon phosphorus content in DC arc furnace by laser induced breakdown spectrometer, Send the acquisition results to Class I Base Control System 2, Class II Base Control System 3 and Class III Base Control System 1, Based on the DDPG algorithm, the following results are output and sent to each set of distributors: Class II bottom electrode sprays oxygen-lime powder into the molten tank, The powder spray injection rate of 25 kg/min, Oxygen flow rate of 300 N m3/h, Non-liquid steel for rapid deep dephosphorization; Class I bottom electrode spraying air-graphite powder into the molten tank, The spraying rate was 6 kg/min, Air flow rate of 120 N m3/h, Use the carbon and oxygen reaction to accelerate the mass transfer in the molten tank; Class III bottom electrode to spray Ar into the molten cell, Flow rate of 250 N L/min.
(4)27~30min, The electric arc furnace melting tank is in the heating stage, Thermocouples monitor the bottom electrode temperature in real time, The pressure sensor monitors the pressure of the injection pipe in real time, Real-time analysis of carbon phosphorus content in DC arc furnace by laser induced breakdown spectrometer, Send the acquisition results to Class I Base Control System 2, Class II Base Control System 3 and Class III Base Control System 1, Based on the DDPG algorithm, the following results are output and sent to each set of distributors: Class I bottom electrode spraying air-graphite powder into the molten tank, The spraying rate was 10 kg/min, Air flow rate of 150 N m3/h; Class II bottom electrode to spray oxygen into the molten tank-lime powder, Powder izing rate 10 kg/min, Oxygen flow rate of 300 N m3/h, Spray O2-CO2 mixed gas into the molten cell, CO2 Volume ratio of 30%, Flow rate of 400 N L/min, Strengthen the reaction in the molten pool.
(5)31~33min, Thermocouples monitor the bottom electrode temperature in real time, The pressure sensor monitors the pressure of the injection pipe in real time, Real-time analysis of carbon phosphorus content in DC arc furnace by laser induced breakdown spectrometer, Send the acquisition results to Class I Base Control System 2, Class II Base Control System 3 and Class III Base Control System 1, The following results are output based on the DDPG algorithm and sent to each set of distributors: Class I bottom electrode spraying air-toner into the melting tank, The spraying rate was 8 kg/min, Air flow rate of 100 N m3/h; Class II bottom electrode to spray oxygen into the molten tank-lime powder, Powder injection rate of 5 kg/min, 100 N m3/h, Class III bottom electrode spray O2-CO2 into the molten cell, Flow rate of 250 N L/min, CO2 Volume ratio of 30%, Prevent the local peroxidation of the liquid steel.
(6)34~37min, Electric arc furnace, Thermocouples monitor the bottom electrode temperature in real time, The pressure sensor monitors the pressure of the injection pipe in real time, Real-time analysis of carbon phosphorus content in DC arc furnace by laser induced breakdown spectrometer, Send the acquisition results to Class I Base Control System 2, Class II Base Control System 3 and Class III Base Control System 1, Based on the DDPG algorithm, the following results are output and sent to each set of distributors: Class I bottom electrode and class II bottom electrode respectively spray air and O2 into the molten tank, Flow rate of 50 N m3/h, Class III bottom electrode is sprayed into the melt tank with Ar, Flow rate of 50 N L/min, Prevent the bottom blow electrode 8 from clogging.

After adopting the method of this invention, the smelting cycle of electric arc furnace is shortened by 7min, the power consumption per ton of steel is reduced by 15kWh, the phosphorus content in liquid steel is less than 0.004%, the nitrogen content is controlled below 50ppm, the technical yield is increased by 1%, the yield of alloys is increased by 4% on average, the cleanliness of liquid steel is significantly improved, and the smelting rhythm is significantly improved.

The present invention is applicable to the smelting process of 10~1000t DC arc furnace, and realizing the composite metallurgical function of multiple base blowing electrodes 8 arranged on the chassis of the bottom electrode. Combined with the bottom electrode during the smelting process, At the same time, the gas, carrier gas 1-carbon material and carrier gas 2-slag powder into the molten tank, While improving the overheating problem of the melting pool in the bottom electrode area, Realize efficient carburization, rapid slag formation, impurity removal and strong stirring, While rapid and uniform melting pool composition and temperature, The smelting cycle is shortened by 3min; Increased rate of toner yield, Metal yield increased by 1~3%, The alloy yield of the alloying process of steel is 4~5% higher than that of the electric furnace with bottomless blowing function; 0.005%, End-point value of N 50ppm.

Finally, the above embodiment is only used to illustrate the technical scheme of the invention, although the invention is detailed with reference to the better embodiment, the ordinary technicians shall understand that the technical scheme of the invention can be modified or replaced without departing from the purpose and scope of the technical scheme, which shall be covered in the scope of the claim of the invention.

## Claims

1. A system for a combination of bottom electrodes, including multiple bottom electrodes, **characterized in that**, some of the said bottom electrodes are bottom blow electrodes with a hollow structure and some of the said bottom blow electrodes belong to one or more classes of bottom electrodes, including class I bottom electrode, class II bottom electrode, and class III bottom electrode;
Class I bottom electrode: used to spray carbonaceous material into the melting pool to carburize the melting pool and accelerate the melting of scrap steel;
Class II bottom electrode: used to spray slag powder into the melting tank to form molten slag particles in the metal liquid and increase the gas-slag-gold three-phase reaction boundary area in the dephosphating reaction process;
Class III bottom electrode: used to spray gas into the melting tank to accelerate mass transfer in the tank;
The Class II bottom electrode and Class I bottom electrode are arranged adjacent to neutralize the local cold effect generated by the Class I bottom electrode; the Class III bottom electrode is dispersed to accelerate the flow at the bottom part of the molten tank and strengthen the heat transfer between slag steel;
The bottom electrode is provided with a thermocouple for monitoring the bottom electrode temperature in real time; the spray pipe connected to the bottom blow electrode is provided with a pressure sensor for monitoring the pressure of the spray pipe in real time;
the said system also includes laser induced breakdown spectrum system, used to stimulate the surface plasma of the melt tank through laser pulse, and through the probe-optical fiber acquisition set on the wall of the DC arc furnace transmitted to the laser induced breakdown spectrometer, online analysis of carbon phosphorus content in the DC arc furnace;
the said system also includes a control unit connected to the bottom blowing electrode to realize the dynamic optimization and automatic control of the spray parameters based on the power supply strength of the bottom blowing electrode, the temperature of the bottom electrode and the carbon and phosphorus content of the molten pool, based on the depth certainty strategy gradient algorithm DDPG.

2. A system of DC arc furnace according to claim 1, wherein the control unit dynamically optimizes and automatically controls the blowing parameters based on the depth deterministic strategy gradient algorithm DDPG, wherein DDPG implements continuous control of the blowing parameters through the actor-Critic architecture;
the state space of the DDPG includes bottom electrode temperature *T_{eletrode},* spray pressure *P_{blow},* calibrated real-time carbon content *Cₜ,* compensated real-time phosphorus content *Pₜ,* bottom *electrodeI_{electrode}*,current intensity Ielectrode, carbon 3-second sliding window differenceΔ*C*_{*t*-3:*t*}and phosphorus 3-second sliding window differenceΔ*P*_{*t*-3:*t*}, state vector *Sₜ* is expressed as: ${S}_{t} = \left[{T}_{electrode}, {P}_{blow}, {C}_{t}, {P}_{t}, {I}_{electrode}, Δ{C}_{t - 3 : t}, Δ{P}_{t - 3 : t}\right]$
the action space of the DDPG includes the jet flow of the bottom electrodes of Class I, Class II and Class III, and the action vector at is expressed as: ${a}_{t} = \left[{Q}_{I},{Q}_{II},{Q}_{III}, {M}_{I},{M}_{II},{M}_{III}\right]$
QI, QII and QIII respectively represent the injection flow of Class I, Class II and Class III bottom electrodes, MI, MII and MIII respectively represent the corresponding spray materials of class I, class II and class III bottom electrodes after single heat coding treatment;
the reward function of DDPG simultaneously considers the control accuracy of carbon and phosphorus content, flow consumption, pressure fluctuation, and the rationality of material selection, and is constructed as: ${R}_{t} = 10 {e}^{- 5 \left|{C}_{t}-{C}_{target}\right|} + 8 {e}^{- 10 \left|{P}_{t}-{P}_{target}\right|} - 0.1 \sum {Q}_{i} - 0.05 {σ}_{P}^{2} + \sum {λ}_{m} {M}_{i}$
C_{target}represents the target carbon content, *P_{target}* the target phosphorus content, *Qᵢ* the spray flow rate, ${σ}_{P}^{2}$ the variance of the pressure fluctuation, *λₘ* the material cost coefficient, and *Mᵢ* the material type selection;
actor network input state space, output action space, namely the jet flow and spray material type of class I, II, and III bottom electrodes respectively; because the material type is a discrete variable, it is encoded as single heat code, and then the result is combined with continuous spray flow rate to map to the discrete material selection
Critic The network input state space and action space, predicting the long-term return after taking a specific action in a given state, that is, the output Q value.

3. A system of DC arc furnace according to claim 1, wherein the medium of the class I bottom electrode is air, nitrogen or CO₂; the carbon material is toner, coking coal or other toner.

4. A system of DC arc furnace according to claim 1, wherein the medium of the class II bottom electrode is O₂, O₂, O₂-N₂ mixture or O₂-CO₂ mixture; the slag powder is lime powder or limestone powder.

5. A system of DC arc furnace according to claim 1, wherein the pure gas bottom blowing medium of the class III bottom electrode is a mixture of one or more of N₂, Ar, CO₂, O₂.

6. A system of DC arc furnace according to claim 1, wherein the inner diameter of the class I bottom electrode and the class II bottom electrode is 4 to 25 mm, and the inner diameter of the type III bottom electrode is 0.1 to 10 mm.

7. A system of DC arc furnace according to claim 1, wherein the bottom blow interface of the bottom blow electrode is insulated from the external medium input interface.

8. A system of DC arc furnace according to claim 1, wherein the bottom electrode is mounted at the bottom of the arc furnace and packed through the bottom of the furnace.

9. A method for blowing the bottom electrode of the DC arc furnace, **characterized in that**, the DC arc furnace electrode as described in claims 1-7 is provided, combining with a power supply strength of the bottom blow electrode dynamically-controlled blowout parameters to realize the cooperative operation of the bottom blow and the bottom electrode.
